# EUROPÄISCHE PATENTANMELDUNG

(11) **EP 0 765 100 A2**
(43) Veröffentlichungstag der Anmeldung: **26.03.1997**
(21) Anmeldenummer: 96115069.5
(22) Anmeldetag: 19.09.1996
(51) Int. Cl.: H04Q 11/04, H04M 11/06, H04M 1/64

(54) **Schnittstelleneinrichtung zur Verbindung eines Computers mit dem ISDN-Netz**

(30) Priorität: 19.09.1995 DE 19534746
(71) Anmelder: wellcom GmbH, 81379 München (DE)
(72) Erfinder: Beedell, Peter, D-82538 Geretsried (DE)
(74) Vertreter: Feldkamp, Rainer, Dipl.-Ing.

(57) **Zusammenfassung**

Eine Schnittstelleneinrichtung zur Verbindung eines einen an seinen Bus angeschlossenen Daten-Massenspeicher aufweisenden Computers mit dem ISDN-Netz (100), das über eine Anschlußbaugruppe (1) an die Schnittstelleneinrichtung angeschlossen ist, weist einen CODEC (2) zur Umwandlung zwischen den digitalen Signalen von der ISDN-Anschlußbaugruppe (1) und analogen Sprachsignalen zur Zuführung an einen Handapparat (5), eine Analog-Digital-PCM-Wandlerbaugruppe (ADPCM) (3) zur Umwandlung zwischen analogen Sprachsignalen und digitalen, auf dem Massenspeicher (6) gespeicherten Signalen und eine Vielzahl von Schalteinrichtungen (7-12) auf, die selektive Verbindungen der einzelnen Baugruppen miteinander unter der Steuerung des Computers derart herstellen können, daß folgende Datenpfade ausgebildet werden:
ein erster Datenpfad zur direkten Verbindung des Handapparates mit dem ISDN-Netz über den CODEC und die ISDN-Anschlußbaugruppe,
ein zweiter Datenpfad zwischen den Handapparat und dem Computer-Bus und dessen Massenspeicher über den ADPCM,
ein dritter Datenpfad zwischen dem Massenspeicher und dem ISDN-Netz über den Computer-Bus, den ADPCM und den CODEC sowie die ISDN-Anschlußbaugruppe.

## Beschreibung

Die Erfindung bezieht sich auf eine Schnittstelleneinrichtung zur Verbindung eines Computers mit dem ISDN-Netz, der im Oberbegriff des Patentanspruchs 1 genannten Art.

Für die Tonsignalverarbeitung in Computern, insbesondere Mikrocomputern, ist es allgemein bekannt, Tonsignal-Verarbeitungskarten einzusetzen, die Digital-/Analog- und Analog-/Digitalwandler aufweisen, mit deren Hilfe in dem Massenspeicher, beispielsweise einer Festplatte des Computers gespeicherte Digitalsignale in Tonfrequenz-Analogsignale bzw. Tonfrequenz-Analogsignale in Digitalsignale umsetzbar sind.

Weiterhin sind für derartige Mikrocomputer ISDN-Schnittstellenkarten bekannt, die jedoch hauptsächlich zur Übertragung von digitalen Daten zu und von dem ISDN-Netz bestimmt sind, wobei derartige Schnittstellenkarten eine Anschlußbaugruppe zur Anpassung an das ISDN-Netz aufweisen, die den erforderlichen Abschluß für das ISDN-Netz und die Anpassung an das in dem Computer verwendete Signalübertragungsformat herstellt.

Um einen Computer für die Übertragung von Sprachsignalen an das ISDN-Netz geeignet zu machen, damit sowohl Tonfrequenzsignale als auch Datensignale übertragen werden können, sind üblicherweise zumindestens eine ISDN-Schnittstellenkarte und eine Tonfrequenz-Karte erforderlich, so daß mehrere Steckkartenplätze in dem Computer benötigt werden und gleichzeitig eine Vielzahl von Baugruppen auf den einzelnen Steckkarten doppelt vorhanden sein muß.

Der Erfindung liegt die Aufgabe zugrunde, eine Schnittstelleneinrichtung der eingangs genannten Art zu schaffen, die mit geringstmöglichem Aufwand einen universellen Einsatz des Computers zur Tonsignal- und Datenübertragung über das ISDN-Netz ermöglicht.

Diese Aufgabe wird durch die im Patentanspruch 1 angegebenen Merkmale gelöst.

Vorteilhafte Ausgestaltungen und Weiterbildungen der Erfindung ergeben sich aus den Unteransprüchen.

Durch die erfindungsgemäße Ausgestaltung der Schnittstelleneinrichtung kann der Computer vielfältige Leistungsmerkmale für Telefoniezwecke aufweisen, und beispielsweise als Anrufbeantworter, zur Übertragung einer Sprachnachricht an einen derzeit nicht erreichbaren Teilnehmer oder zur Übertragung von gesprochenen Mitteilungen an eine Vielzahl von Teilnehmern dienen, wobei selbstverständlich auch eine digitale Datenübertragung fürFernkopier- und andere Zwecke möglich ist.

Ausführungsbeispiele der Erfindung werden im folgenden anhand der in der Zeichnung dargestellten Ausführungsbeispiele noch näher erläutert.

In der Zeichnung zeigen:
- Fig. 1: ein Blockschaltbild einer Ausführungsform der Schnittstelleneinrichtung,
- Fig. 2: die Ausführungsform der Schnittstelleneinrichtung nach Fig. 1 in einem Schaltzustand zur direkten Übertragung von Sprachsignalen von dem und zu dem ISDN-Netz,
- Fig. 3: die Ausführungsform der Schnittstelleneinrichtung in einem Schaltzustand zur Aufzeichnung und Wiedergabe von Sprachsignalen auf dem Massenspeicher des Computers,
- Fig. 4: die Ausführungsform der Schnittstelleneinrichtung in einem Schaltzustand zur Übertragung von in dem Massenspeicher gespeicherten Sprachsignalen an das ISDN-Netz bzw. zur Speicherung von Sprachsignalen von dem ISDN-Netz auf dem Massenspeicher,
- Fig. 5: die Ausführungsform der Schnittstelleneinrichtung in einem Schaltzustand zur Übertragung von Tonfrquenzsteuersignalen an das und von dem ISDN-Netz.

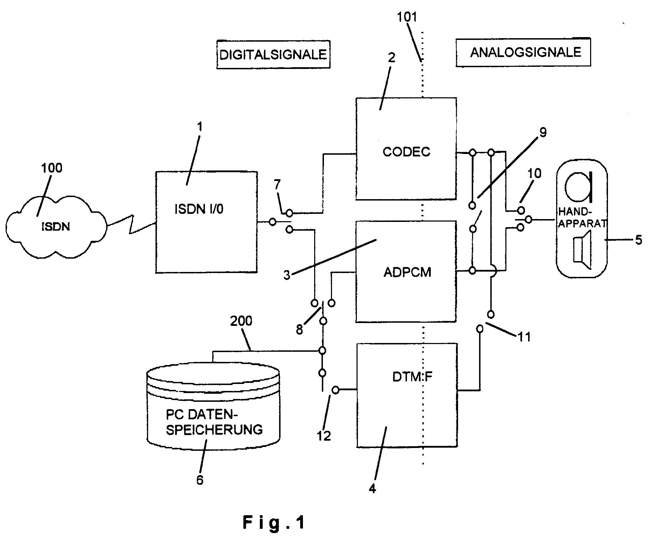

In Fig. 1 ist die grundlegende Ausführungsform der Schnittstelleneinrichtung zur Verbindung eines Computers mit dem ISDN-Netz 100 gezeigt. Der Anschluß der Schnittstelleneinrichtung erfolgt über eine Anschlußbaugruppe 1, die den erforderlichen Abschluß für das ISDN-Netz 100 bildet und digitale Signale zur Weiterverarbeitung in noch zu beschreibenden Baugruppen zur Verfügung stellt, bzw. von diesen Baugruppen kommende Signale in ein zur Übertragung über das ISDN-Netz geeignetes Format umwandelt.

Diese Baugruppen umfassen einen Codierer-Decodierer (CODEC) 2 zur Umwandlung von analogen Sprachsignalen zur Übertragung an die ISDN-Anschlußbaugruppe 1 bzw. zur Umwandlung digitaler Signale von dieser Anschlußbaugruppe 1 in Analogsignale, eine ADPCM-Baugruppe zur Umwandlung von Digitalsignalen in Tonfrequenzsignale und umgekehrt, wobei eine auf wenige Bits pro Abtastwert reduzierte PCM-Codierung verwendet wird, um den auf dem Massenspeicher 6 benötigten Speicherplatz zu reduzieren, und eine Dualton-Mehrfrequenzsignalgenerator- und Detektorschaltung (DTMF) 4.

Die in Fig. 1 gezeigte Schnittstelleneinrichtung weist einen Digitalsignalabschnitt, der sich links von einer Linie 101 befindet, und einen Analogsignalabschnitt auf, der sich rechts von der Linie 101 befindet.

Zur Erzeugung und Auswertung von Tonfrequenz- bzw. Sprachsignalen ist ein Handapparat 5 der bei Telefonen üblichen Art vorgesehen, und weiterhin ist ein Anschluß an den Daten-, Steuer- und Adressen-Bus des Computers vorgesehen, von dem lediglich der Massenspeicher 6, beispielsweise in Form einer Festplatte gezeigt ist.

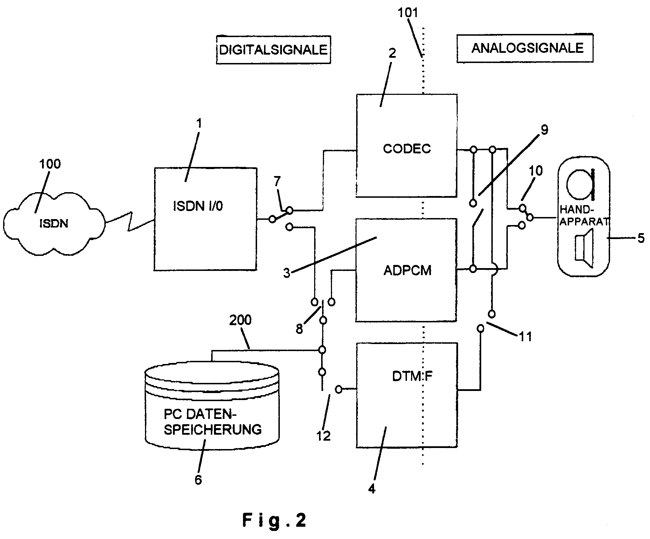

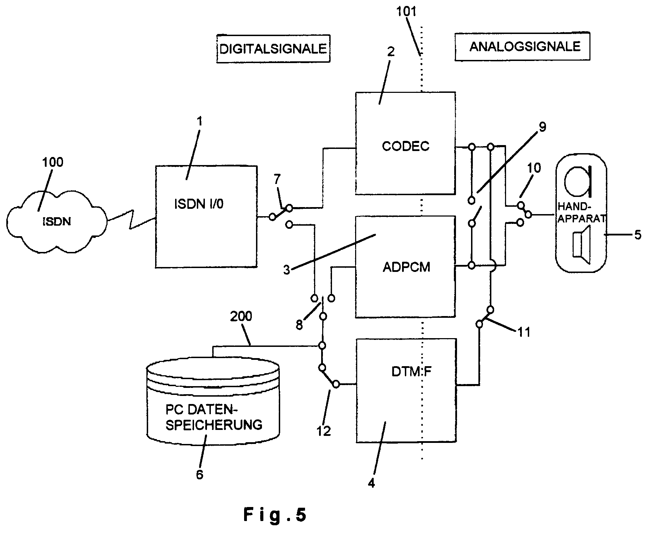

Die einzelnen Baugruppen sind in der in der Fig. 1 gezeigten Weise über eine Vielzahl von Schalteinrichtungen 7 - 12 selektiv miteinander verbindbar, wobei die für den einzelnen Anwendungsfall erforderlichen Schaltstellungen in den Fig. 2 - 5 gezeigt sind.

Obwohl diese Schalter 7 - 12 als mechanische Schalter dargestellt sind, ist es selbstverständlich, daß diese Schalter bei der bevorzugten Ausführungsform zumindest weitgehend in Form von elektronischen Schaltern ausgebildet sind, und weiterhin ist es selbstverständlich möglich, die Funktionen des CODEC 2, des ADPCM 3 und des DTMF 4 zumindest teilweise in einem digitalen Signalprozessor zu kombinieren, dessen Funktionen entsprechend umgesteuert werden.

Die Schalter 7 - 21 ihrerseits sowie die Baugruppen 2 bis 4 und ggf. der digitale Signalprozessor werden teilweise durch in der Schnittstelleneinrichtung selbst bzw. in dem Mikroprozessor 6 erzeugte Signale gesteuert.

In Fig. 2 ist eine erste Anwendung der Schnittstelleneinrichtung zur Verbindung des Handapparats 5 mit dem ISDN-Netz 100 gezeigt, um eine direkte Telefonverbindung über das ISDN-Netz herzustellen. In diesem Fall ist der Handapparat 5 über den Schalter 10 mit dem CODEC 2 verbunden, der seinerseits mit der ISDN-Anschlußbaugruppe 1 verbunden ist.

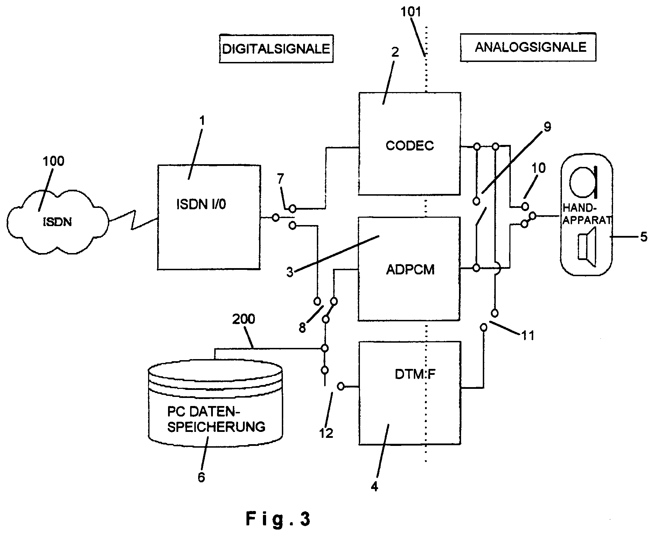

Sollte eine direkte Verbindung einem entfernten Teilnehmer über das ISDN-Netz nicht möglich sein, beispielsweise weil dieser Teilnehmer nicht erreichbar ist oder sein Anschluß besetzt ist, so kann die Schnittstelleneinrichtung in den in Fig. 3 gezeigten Schaltzustand gebracht werden, bei dem der Handapparat 5 über den Schalter 10 mit dem Analogeingang des ADPCM verbunden wird, dessen Digitalausgang andererseits über den Schalter 8 mit dem Computer bzw. dessen Massenspeicher 6 verbunden wird, so daß es möglich ist, die analogen Sprachsignale von dem Handapparat 5 auf dem Massenspeicher 6 für eine spätere Aussendung zu speichern.

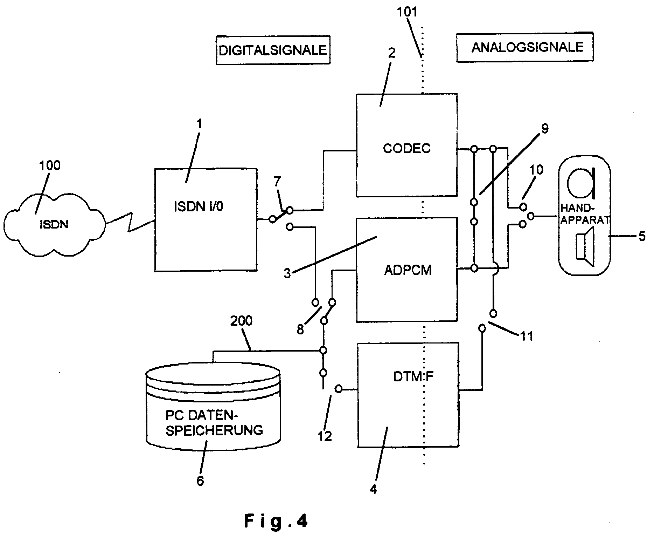

Die auf dies Weise digitalisierten und gespeicherten Sprachsignale können zu einem vorgegebenen Zeitpunkt von dem Computer aus dessen Massenspeicher 6 automatisch auf das ISDN-Netz übertragen werden, wie dies in Fig. 4 gezeigt ist. Hierbei durchlaufen die in dem Massenspeicher 6 gespeicherten digitalisierten Sprachsignale über den Schalter 8 zunächst den ADPCM 3, wobei am Ausgang des ADPCM analoge Sprachsignale zur Verfügung stehen, die dann über den Schalter 9 und den CODEC 2 sowie über den Schalter 7 an die ISDN-Anschlußbaugruppe 1 zur Übertragung an das ISDN-Netz 100 weitergeleitet werden.

Wie aus dem Vorstehenden zu erkennen ist, kann die beschriebene Schnittstelleneinrichtung drei Signalpfade in beliebiger Auswahl zur Verfügung stellen, nämlich einen Sprachsignaldatenpfad, bei dem gemäß Fig. 2 der Handapparat mit dem ISDN-Netz verbunden wird und den Aufbau einer Verbindung über dieses ISDN-Netz sowie die Beendigung dieser Verbindung ermöglicht.

Ein zweiter Übertragungspfad gemäß Fig. 3 ermöglicht die Übertragung von digitalisierten Sprachsignalen von und zu dem Computer-Bus und damit zu dessen Massenspeicher, wobei die Aufzeichnung auf dem Massenspeicher in einem in der Computertechnik üblichen Format, beispielsweise dem weitverbreiteten WAV-Format erfolgen kann. Durch die Signalkompressionsalgorithmen, wie sie bei der üblichen ADPCM-Baugruppe verwendet werden, ergeben sich verringerte Datenraten, so daß Speicherplatz auf dem Massenspeicher 6 eingespart werden kann.

Ein dritter Datenpfad gemäß Fig. 4 ermöglicht die Übertragung von digitalisieren Sprachsignalen zwischen dem Computer-Bus und dem ISDN-Netz. Die Verbindung des Computer-Bus mit dem ISDN-Netz erfolgt hierbei über den Zwischenschritt der Umwandlung auf Analogsignale und nachfolgende Übertragung dieser Analogsignale über den CODEC 2 an das ISDN-Netz.

Die erfindungsgemäße Schnittstelleneinrichtung ermöglicht daher vielfältige Betriebsmöglichkeiten. So ist es beispielsweise möglich, ankommende Gespräche, die von dem Benutzer des Computers nicht angenommen werden, beispielsweise weil er abwesend ist, von dem Computer selbst beantwortet werden können, wobei eine vorher gemäß Fig. 3 auf dem Massenspeicher 6 aufgezeichnete Antwortmitteilung abgespielt wird, die den Anrufer auffordert, eine Nachricht zu hinterlassen, die in der in Fig. 4 gezeigten Weise auf dem Massenspeicher 6 aufgezeichnet und von dem Benutzer des Computers später in der in Fig. 3 gezeigten Weise wieder abgehört werden kann.

Wenn ein angerufener Teilnehmer zum Zeitpunkt des Anrufes nicht erreichbar ist, so kann der Anrufer seine Nachricht in der in Fig. 3 gezeigten Weise auf dem Massenspeicher 6 seines Computers aufzeichnen und entsprechende Befehle an den Computer geben, diese gespeicherte Nachricht zu einem späteren Zeitpunkt an den angerufenen Teilnehmer zu übertragen, wobei der Computer diesen erneuten Anrufversuch so oft wie erforderlich wiederholen kann, um diese Nachricht zu übertragen. In gleicher Weise ist es selbstverständlich möglich, eine von dem Benutzer des Computers einmal aufgezeichnete Nachricht an eine Vielzahl von anzurufenden Teilnehmern nacheinander zu übertragen, wobei der Computer die Herstellung der Verbindung und die Übertragung der gespeicherten Nachricht übernimmt.

Die Schnittstelleneinrichtung weist vorzugsweise weiterhin eine Mehrfrequenz-Signalgenerator und Detektorschaltung 4 auf, die von dem Computer-Bus über den Schalter 12 ansteuerbar ist, um über den Schalter 11 und den CODEC 2 Mehrfrequenz-Tonsignale an das ISDN-Netz 100 zu übertragen. Mit Hilfe dieser DTMF-Baugruppe 4 können nach der Herstellung einer Verbindung Steuersignale an den angerufenen Teilnehmer übertragen werden, um an der Station des angerufenen Teilnehmers bestimmte Funktionen auszulösen.

Die DTMF-Baugruppe 3 ermöglicht jedoch nicht nur die Aussendung von Mehrfrequenz-Tonsignalen, sondern auch die Auswertung derartiger Tonsignale, wenn sie über den Schalter 11 an den CODEC 2 und über den Schalter 12 an den Computer-Bus angeschlossen ist.

In Verbindung mit den vorstehend beschriebenen Schaltzuständen der Schnittstelleneinrichtung wird damit eine Fernsteuerung von Funktionen über das Telefonnetz ermöglicht. Dies ermöglicht beispielsweise die Fernabfrage von auf dem Massenspeicher 6 während der Abwesenheit des Benutzers des Computers aufgezeichneten Nachrichten sowie eine Fernsteuerung der Funktionen des Computers selbst oder von Funktionen von mit dem Computer verbunden Peripheriegeräten.

Wie dies bereits eingangs erwähnt wurde, können auch die Funktionen der DTMF-Baugruppe ebenso wie die Funktionen der ADPCM-Baugruppe 3 und des CODEC 2 von einem einzigen digitalen Signalprozessor unter entsprechender Steuerung durch den Computer übernommen werden.

## Patentansprüche

1. Schnittstelleneinrichtung zur Verbindung eines Computers mit dem ISDN-Netz, wobei der Computer einen an seinen Bus angeschlossenen Massenspeicher zur Speicherung von Daten aufweist und das ISDN-Netz über eine Anschlußbaugruppe (1) an die Schnittstelleneinrichtung angeschlossen ist,
dadurch gekennzeichnet, daß die Schnittstelleneinrichtung einen CODEC (2) zur Umwandlung zwischen den digitalen Signalen von der ISDN-Anschlußbaugruppe (1) und analogen Sprachsignalen zur Zuführung an einen Handapparat (5) aufweist, daß die Schnittstelleneinrichtung weiterhin eine Analog-Digital-PCM-Wandlerbaugruppe (ADPCM) (3) aufweist, die eine Umwandlung zwischen analogen Sprachsignalen und digitalen, auf dem Massenspeicher (6) gespeicherten Signalen ermöglicht, und daß eine Vielzahl von Schalteinrichtungen (7-12) vorgesehen ist, die selektive Verbindungen der einzelnen Baugruppen miteinander unter der Steuerung des Computers derart herstellen kann, daß folgende Datenpfade ausgebildet werden:
ein erster Datenpfad zur direkten Verbindung des Handapparates (5) mit dem ISDN-Netz (100) über den CODEC (2) und die ISDN-Anschlußbaugruppe (1),
ein zweiter Datenpfad zwischen den Handapparat (5) und dem Computer-Bus und dessen Massenspeicher (6) über den ADPCM (3),
ein dritter Datenpfad zwischen dem Massenspeicher (6) und dem ISDN-Netz (100) über den Computer-Bus, den ADPCM (3) und den CODEC (2) sowie die ISDN-Anschlußbaugruppe (1).

2. Schnittstelleneinrichtung nach Anspruch 1,
dadurch gekennzeichnet, daß weiterhin eine Mehrfrequenz-Signalgenerator- und Detektorbaugruppe (DTMF) (4) vorgesehen ist, die mit dem ISDN-Netz (100) über die ISDN-Anschlußbaugruppe (1) und den CODEC (2) einerseits und andererseits mit dem Computer-Bus und dessen Massenspeicher (6) verbindbar ist.

3. Schnittstelleneinrichtung nach Anspruch 1 oder 2,
dadurch gekennzeichnet, daß die Funktionen des CODEC (2) und/oder des ADPCM (3) und/oder des DTMF (4) in einem digitalen Signalprozessor vereinigt sind.

4. Schnittstelleneinrichtung nach einem der Ansprüche 1 - 3,
dadurch gekennzeichnet, daß die Schalter (7-12) durch den Computer-Bus programmgesteuert betätigbar und als elektronische Schalter ausgebildet sind.

5. Schnittstelleneinrichtung nach einem der vorhergehenden Ansprüche,
dadurch gekennzeichnet, daß die DTMF-Baugruppe (4) die Erkennung der Signalquelle eines Anrufs ermöglicht und eine Auswertung dieses Anruf als Telefonie- oder Telefaxverbindung ermöglicht.

6. Schnittstelleneinrichtung nach einem der vorhergehenden Ansprüche,
dadurch gekennzeichnet, daß auf dem Massenspeicher (6) gespeicherte Sprachsignale unter der Steuerung durch den Computer aufeinanderfolgend an eine Vielzahl von anzurufenden Teilnehmern übertragbar sind.

7. Schnittstelleneinrichtung nach einem der vorhergehenden Ansprüche,
dadurch gekennzeichnet, daß die DTMF-Baugruppe (4) mit dem Computer-Bus derart verbunden ist, daß über das ISDN-Netz Funktionen des Computers auslösbar sind.
